# EUROPEAN PATENT APPLICATION

(11) **EP 2 011 420 A1**
(43) Date of publication of application: **07.01.2009**
(21) Application number: 08158512.7
(22) Date of filing: 18.06.2008
(51) Int. Cl.: A47J 17/02, A47J 43/20

(54) **Treatment mat for preparing of new potatoes and other root vegetables**

(30) Priority: 19.06.2007 SE 0701502
(71) Applicant: Berggren, Berit, Ekhagegatan 7 V 441 44 Alingsaes (SE)
(72) Inventor: Berggren, Berit, Ekhagegatan 7 V 441 44 Alingsaes (SE)
(74) Representative: Bergentall, Annika Maria

(57) **Abstract**

The present invention relates to a device (2) in treatment mat (1) to be used in hole-shaped spaces (3) for treatment of objects (4) therein.
According to the invention, the mat (1) is formed of a flexible liquid durable material, having a number of foldable portions (6, 6¹, 6², 6ⁿ) outgoing from a central intermediate part (5). The mat is provided with a friction top surface (7) for treatment of objects against, especially potatoes (4), as well as a friction increasing bottom surface (9) for abutment against and retention of a reception surface (10) of said reception space (3).

## Description

The present invention relates to a device in treatment mat to be used in hole-shaped spaces for treatment of objects therein.

There is, especially in connection with peeling and cleaning of new potatoes, a problem to treat the potatoes so that without too much inconvenience and loss of the potatoes one can get the potatoes in a boilable and eatable state. There are methods and facilities in the form of sponges, brushes, friction increasing scrape gloves etc in addition to conventional hand- or power-driven potato peelers to be able to get the peels away or at least the worst outer surface of the new potatoes which it is desired to boil.

Known means entails that it is made dirty in and around the tub where the potatoes is kept together with water, with peelings and starch splashing, as well as the fact that the facilities often are bulky and that each potato that it is desired to scrape/peel has to be touched.

The main object of the present invention is to solve among other thing the above mentioned problems by a simply working device and which occupies little space in storage state and which collects peelings to facilitate transfer of the same to compost container, as well as which also can be suitable to be used for dishing purposes of fragile dishes.

Said object is attained by means of a device according to the present invention and which in all essentials is characterized in that the mat is formed of a flexible liquid durable material, that the mat is provided with a number of foldable portions outgoing from a central intermediate part, that the said central intermediate part and/or said outgoing foldable portions is/are provided with a friction top surface for treatment of objects, especially potatoes, against as well as a friction increasing bottom surface for abutment against and retention of the reception surface of said reception space.

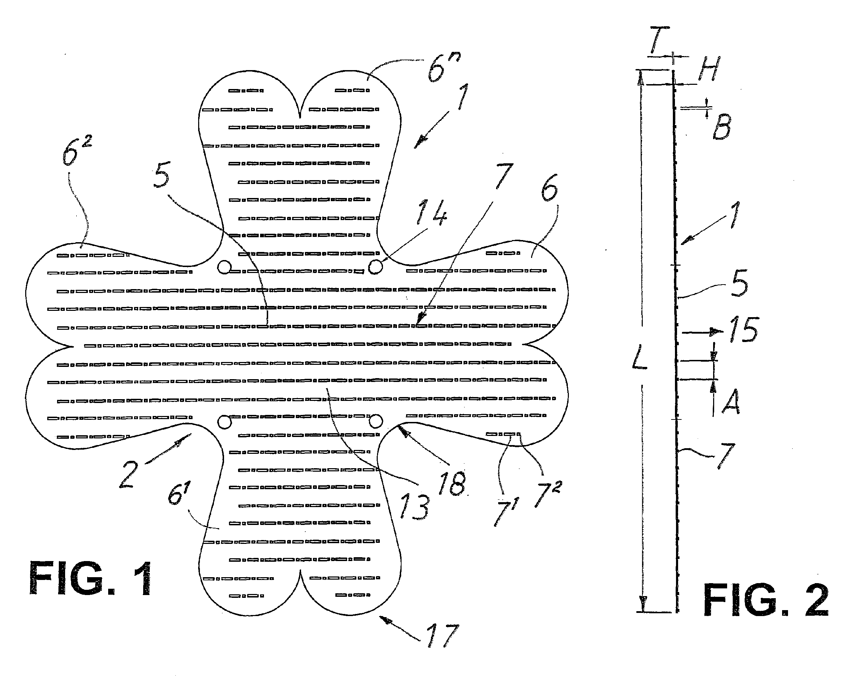

The present invention is described below in the form of a number of preferred embodiment examples, reference being made to the accompanying drawings, in which
Fig. 1 shows in planar view a treatment mat according to the invention in extended state and as seen from above,
Fig. 2 shows said mat as seen from the side,

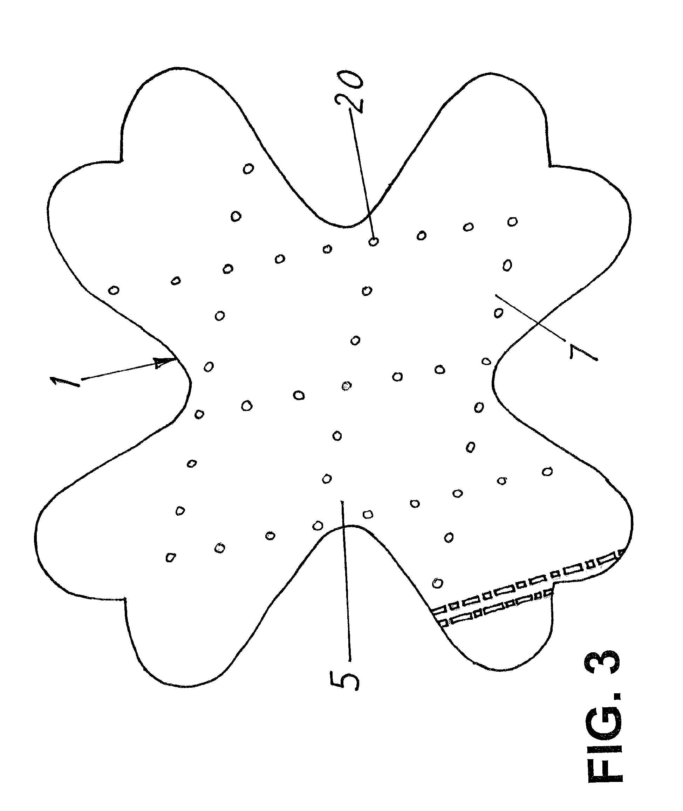

Fig. 3 shows a perspective picture of the treatment mat as seen obliquely from above,

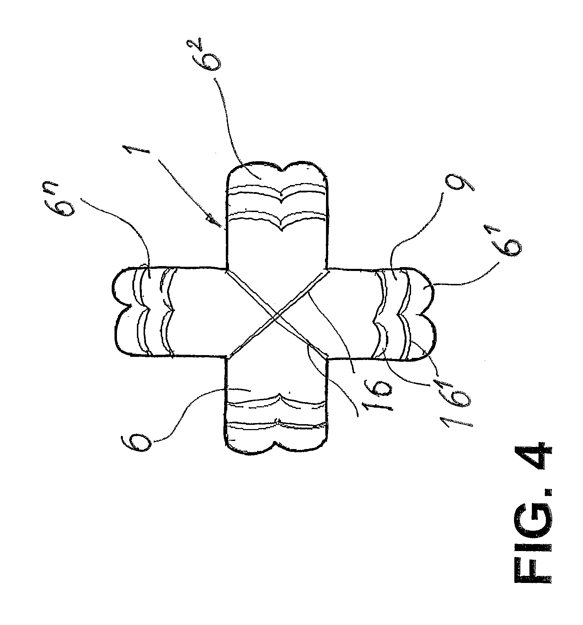

Fig. 4 shows the treatment mat as seen from below, and

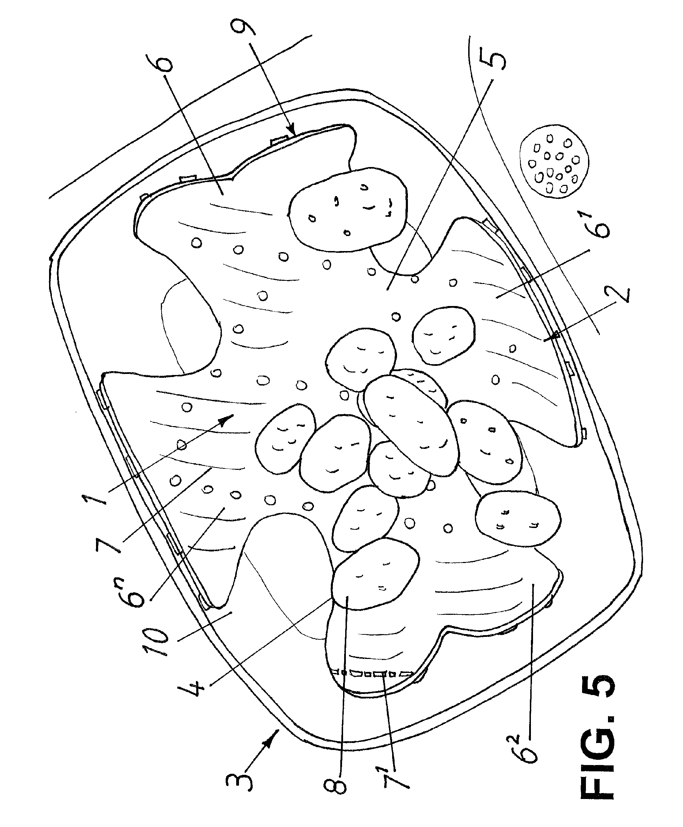

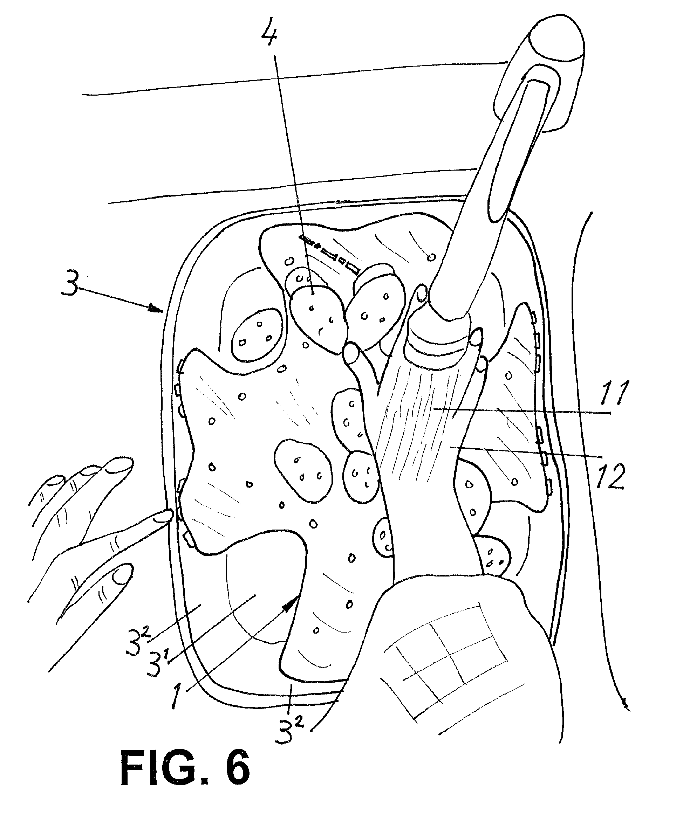

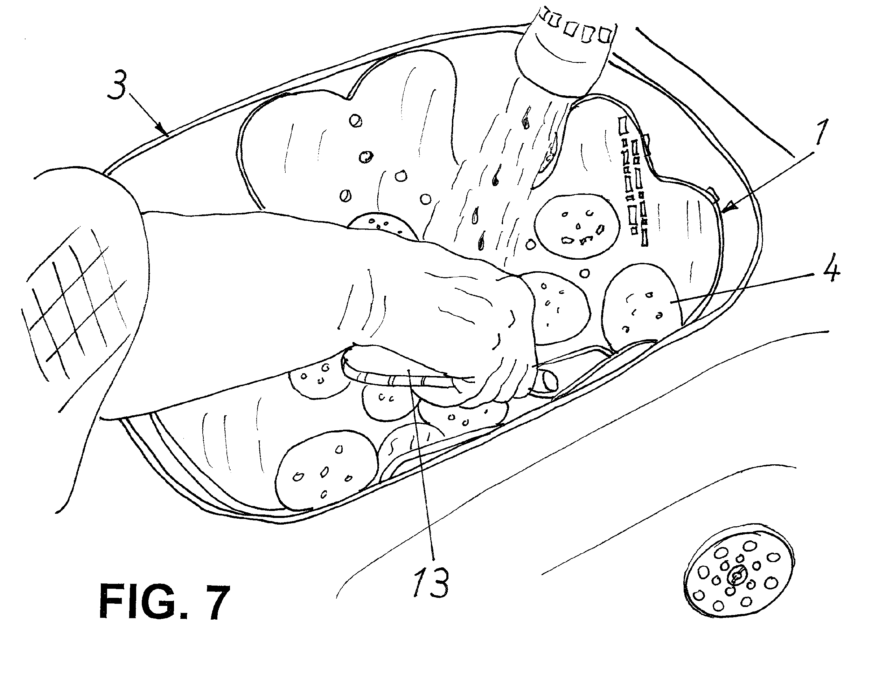

Figs. 5-7 show a said treatment mat in active potato treatment state.

The treatment mat 1 according to the present invention is simple to use and to understand to use. It is comprised of a device 2 and is intended and arranged to be used in hole-shaped spaces 3 to therein provide treatment of objects, such as especially potatoes 4.

According to the present invention, the mat 1 is formed of a flexible liquid durable material, such as plastic or rubber material. The mat 1 is provided with a number of foldable portions 6, 6¹, 6², 6ⁿ outgoing from a central intermediate part 5 and that at least the said central intermediate part 5, but preferably also the foldable portions 6-6ⁿ, is/are provided with a friction top surface 7 intended for treatment of objects against and especially then new potatoes 4, which it is desired to scrape away the thin peel 8 from. A friction increasing bottom surface 9 has the said mat 1, to provide good abutment and retention against the reception surface 10 of said reception spaces 3. That is, against the bottom and walls of the hole-shaped space 3 in e.g., a washing-up sink, a bucket etc.

The said treatment mat 1 may consist of a brightly coloured plastic mat having an attractive shape. The function is simple to understand. The mat 1 is placed in a washing-up sink 3, a bucket or some other suitable space, where it fastens thanks to the good adhesion thereof with the friction increasing bottom surface 9 thereof. It may for example be suction plugs. The fresh potatoes 4 is put in the washing-up sink 3 on the mat 1, and under a little running water 11, alternatively lying in water 11 on the bottom of the washing-up sink or another reception space therefor, one stirs using the hand 12 or some means therefor, e.g., a dishbrush 13, around the potatoes 4 in the washing-up sink 3 so that the potatoes 4 scrape against the rough or in another way provided friction top surface 7 of the mat 1 and the potatoes 4 thereby become practically peelless depending on how long the potatoes 4 are allowed to be scraped against the mat 1 and the friction top surface 7 thereof. For instance, it may be formed of friction means in the form of e.g., sandpaper-like or metal shavings-like material. After the peel scraping, collected peelings can easily be moved over to a compost container intended therefor by lifting the corners of the mat or in the upward-folded tongues 6-6ⁿ.

Additional advantages of the mat 1 is that it occupies little space and can accordingly easily be stowed away and brought along in e.g., boat, caravan or camper. Furthermore, the said treatment mat 1 consists of plastic or rubber material and is provided with a plurality of foldable tongues 6-6ⁿ, the number thereof adapted to the shape of the said reception space 3. Preferably, the mat 1 has an even number of tongues 6-6ⁿ, for instance four tongues. The central intermediate part 5 of the mat 1, which then is quadrangular or may have another circumference shape, is provided with a plurality of through openings 20 along at least the intermediate part 5 for water flowing through. At corners or at the circumference of the intermediate part 5, there are a number of through holes 14 for hanging up the said treatment mat 1.

The said friction top surface 7 of the mat 1 is formed of friction means in the form of a plurality of borders 7¹, stubs 7² or a combination thereof projecting in the upward direction 15 from the treatment mat 1, i.e. perpendicularly from the mat 1. Preferably, said friction means 7 are arranged in parallel line and/or square-shaped at mutual distance A from each other and they may e.g., have a height H of 1,5 mm and a width B of 2,5 mm. The mat 1 may be 1,5 mm thick T and having a length L, which reaches along the entire width of a washing-up sink 3 as well as opposite edges of the washing-up sink 3. Such friction means 7, which work as scrapers, may be arranged along the entire surface of the mat 1. The mat 1 may also have a plurality of channels, which work as friction means.

The bottom surface 9 of the mat 1 may be formed of a plurality of patterns distributed along the surfaces of the mat having friction increasing stubs etc, or the like, which are arranged to especially in wet state increase the adhesion of the mat 1 against a bottom 3¹ and wall 3²/ walls 3² of said reception space, e.g., a washing-up sink or bucket. Otherwise, the mat 1 may consist of such material that inherently has good sucking adhesion, also with a smooth bottom surface against a said substratum, so that the mat 1 stays in place during the proper peel treatment of the potatoes etc. That is, plastic or rubber feeling fat in itself when it is touched and having good friction.

According to embodiment examples of the device 2, four foldable, rounded tongues 6-6ⁿ project from the intermediate part 5 of the mat 1 having split tip 17 and having hanging up holes 14 in the corners 18 of the intermediate part 5.

If it desired to cut in the mat 1 to make it better fit to the hole-shaped space it is desired to utilize the mat in, there are a number of channel-shaped depressions 16¹ in the tongues 6-6ⁿ so that it is easy to, e.g., cut off the same to desired suitable length if required. Transverse to the intermediate part, there may be depressions 16, which facilitate folding of the mat 1. In the ends of the tongues 6-6ⁿ, there may be magnets 21 and/or other detachably interconnectable elements, which are arranged to be able to hold together the tongues 9 to formation of a basket, when it is desired to be able to handle the peelings etc on the mat 1 after the potatoes have been finished peeling.

To sum up a present device may have the following function and nature:
- Main function:: Clean new potatoes and other root vegetables.
- Part function:: Faster process than common peeling.
Decrease the trash in the drain.
Make use of the wholesomeness of the potato in the peel.
- Support functions: Simple to use.: Easy to rinse off/make clean.
Easy to take out and put away.
May advantageously be used in caravan/boat/camper.

Environmental-friendly & food-approved material.

Flexible shape for use in different tubs.

May be supplemented with tool to rotate the contents.

No chipped fingers.

Can be used as compost collector in the washing-up sink.
- Properties:: Plastic mat having friction-giving surface, for cleaning root vegetables by rotation under water jet or in water. The shape of the mat entails that it may be applied in washing-up sink, bucket or tub. The material of the mat at the back fastens against the substratum.
- Additional fields of application:: As dish mat upon hand dishing fragile glasses etc.

The invention is naturally not limited to the embodiments described above and shown in the accompanying drawings. Modifications are feasible, particularly as for the nature of the different parts, or by usage of equivalent technique, without departing from the protection area of the invention, such as it is defined in the claims.

## Claims

1. A device (2) in treatment mat (1) to be used in hole-shaped spaces (3) for treatment of objects (4) therein, **characterized in that** the mat (1) is formed of a flexible liquid durable material, that the mat (1) is provided with a number of foldable portions (6, 6¹, 6², 6ⁿ) outgoing from a central intermediate part (5), that the said central intermediate part (5) and/or said outgoing foldable portions (6-6ⁿ) is/are provided with a friction top surface (7) for treatment of objects against, especially potatoes (4), as well as a friction increasing bottom surface (9) for abutment against and retention of the reception surface (10) of said reception space (3).

2. Device according to claim 1, **characterized in that** the treatment mat (1) consists of plastic or rubber material having a plurality of foldable tongues (6-6ⁿ), the number thereof adapted to the shape of the said reception space (3), preferably an even number of tongues, for instance four tongues.

3. Device according to claim 2, **characterized in that** at least the central intermediate part (13) is provided with a friction top surface (7) and a number of through drainage openings (20).

4. Device according to any one of the above claims, **characterized in that** the friction top surface (7) is formed of friction means in the form of a plurality of borders (7¹), stubs (7²) or a combination thereof projecting from the treatment mat (1) in the upward direction (15), or a plurality of channels in the treatment mat (1).

5. Device according to claim 4, **characterized in that** said friction means (7) are arranged line-shaped and/or square-shaped at mutual distance (A) from each other.

6. Device according to claim 5, **characterized in that** the friction means (7) are arranged in parallel in relation to each other.

7. Device according to any one of the above claims, **characterized in that** the friction means (7) are arranged to extend along in all essentials the entire top surface of the mat (1).

8. Device according to any one of the above claims, **characterized in that** the tongues (6-6ⁿ) are formed of a plurality of rows with channels (16, 16¹) or the like distributed along the surfaces of the mat, which are arranged to facilitate cutting-off the tongues (6-6ⁿ) and/or folding of the mat.

9. Device according to claim 8, **characterized in that** said channels (16¹) are formed of grooves, which extend transversely over the foldable side portions (6-6ⁿ).

10. Device according to any one of the above claims, **characterized in that** from the intermediate part (5) of the mat (1), four foldable, rounded tongues (6-6ⁿ) project having split tip (17) and having through holes (14) for hanging up the mat in corners (18) or at the circumference of the intermediate part (5).
